# FASCICULE DE BREVET EUROPEEN

(11) **EP 2 280 364 B1**
(45) Date de publication et mention de la délivrance du brevet: **26.06.2013**
(21) Numéro de dépôt: 10171183.6
(22) Date de dépôt: 29.07.2010
(51) Int. Cl.: G06F 21/75, G06F 1/10

(54) **Détecteur d'injection de fautes dans un circuit intégré**
Fehlerinjektionsdetektor in einer integrierten Schaltung
Faults injection detector in an integrated circuit

(30) Priorité: 30.07.2009 FR 0955349
(43) Date de publication de la demande: 02.02.2011
(73) Titulaire: STMicroelectronics (Rousset) SAS, 13790 Rousset (FR)
(72) Inventeur: Bancel, Frédéric, 13560, Senas (FR); Berard, Nicolas, 13530, Trets (FR)
(74) Mandataire: de Beaumont, Michel

(56) Documents cités:
- EP-A1- 1 560 031
- EP-A1- 1 560 033
- EP-A1- 1 876 459
- JARAMILLO K ET AL: "10 TIPS FOR SUCCESSFUL SCAN DESIGN: PART ONE" EDN ELECTRICAL DESIGN NEWS, REED BUSINESS INFORMATION, HIGHLANDS RANCH, CO, US, vol. 45, no. 4, 17 février 2000 (2000-02-17), pages 67-73,75, XP000966353 ISSN: 0012-7515

## Description

### Domaine de l'invention

La présente invention concerne de façon générale les circuits électroniques et, plus particulièrement, la détection de perturbations dans le fonctionnement d'un circuit intégré.

### Exposé de l'art antérieur

Les puces de circuit intégré peuvent comprendre des circuits considérés comme sensibles du point de vue de la sécurité des données qu'ils manipulent, par exemple, des clés de chiffrement ou d'authentification, des signatures, etc. De telles informations sont censées rester secrètes, c'est-à-dire ne pas être communiquées à un tiers ou circuit non autorisé.

Un processus habituel pour pirater des informations manipulées par un circuit intégré consiste à détecter les zones de ce circuit qui interviennent lors de traitements faisant appel à ces informations. Pour cela, le circuit est activé ou placé dans un environnement fonctionnel et des données (par exemple un message à chiffrer) sont introduites en entrée pour être traitées par le circuit. Pendant le traitement, un balayage de la surface du circuit est effectué en utilisant un laser pour injecter des fautes dans le fonctionnement du circuit. On analyse en parallèle la réponse fournie par le circuit pour déterminer la zone (le lieu géographique) du circuit qui intervient dans le traitement des données sensibles. Une fois la ou les zones localisées, le fraudeur concentre ses attaques (par injections de fautes) sur ces zones pour percer le secret manipulé (l'algorithme lui-même ou les clés), par exemple, par analyse des réponses ou par attaques par canaux cachés (side-chanel attacks), par exemple, par analyse statistique de la consommation du circuit.

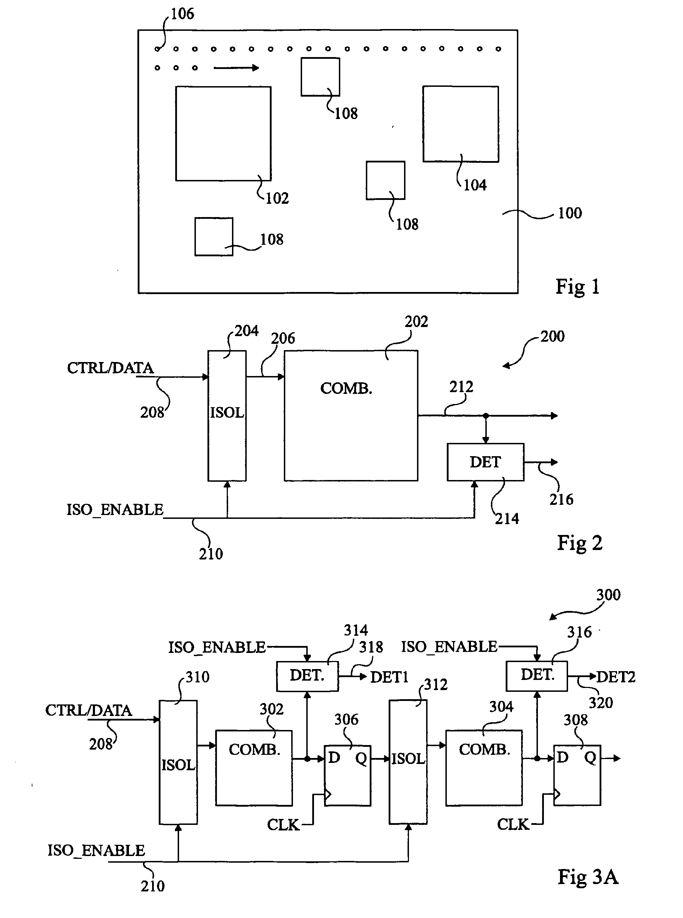

La figure 1 représente, de façon schématique et sous forme de blocs, une puce de circuit intégré 100 incluant des blocs de circuit 102 et 104 sensibles du point de vue de la sécurité des données manipulées, par exemple stockant des clés de chiffrement. Une attaque courante consiste à alimenter le circuit, à appliquer certaines données sur des bornes d'entrées du circuit, puis à balayer à l'aveugle la puce au moyen d'un faisceau laser pour perturber son fonctionnement. Plus précisément, les impacts (symbolisés par des point 106 en figure 1) du faisceau laser vont provoquer un changement d'état dans un circuit logique qui se traduit par une modification des données en sortie du circuit. En corrélant les régions balayées avec les données obtenues, un pirate peut localiser des portions du circuit qui mettent en oeuvre des fonctions manipulant des données sensibles et, par la suite, concentrer ses attaques sur cette zone pour percer les secrets manipulés.

Pour contrer des attaques par balayage laser, les puces de circuit intégré 100 contiennent des circuits de détection 108, par exemple régulièrement distribués dans la surface du circuit. Dès qu'un de ces circuits de détection est atteint par le faisceau laser, il engendre une contre-mesure. Une telle contre-mesure consiste généralement en un blocage du fonctionnement du circuit intégré, par exemple en faisant une remise à zéro pour réactiver le circuit. Un compteur peut aussi être incrémenté après chaque détection d'attaque, de façon à rendre le circuit intégré définitivement non fonctionnel lorsqu'un seuil est atteint, par exemple en grillant un fusible.

Les détecteurs de fautes 108 peuvent prendre différentes formes. Il peut s'agir d'effectuer un calcul redondant par deux chemins différents et de vérifier la cohérence entre les résultats obtenus. Si l'un des chemins subit une attaque laser, le détecteur détecte une absence de cohérence des résultats. D'autres détecteurs surveillent une dérive d'un signal d'horloge.

L'objectif du balayage laser est d'obtenir une cartographie des zones sensibles du circuit (soit parce qu'elles manipulent des données secrètes, soit parce qu'elles contiennent un détecteur), pour ensuite localiser des attaques par injection de fautes.

En supposant que le circuit intégré est muni d'un mécanisme rendant de façon définitive et irréversible le circuit non fonctionnel et muet, plus le nombre de détecteurs dans la surface du circuit est important, plus le nombre de pièces (de circuits) qui sera nécessaire à un fraudeur pour localiser des zones sensibles sera important. Or, la rentabilité "d'une attaque" pour un fraudeur dépend du nombre de circuits intégrés qu'il lui faut sacrifier pour parvenir à percer le secret. Toutefois, plus le nombre de détecteurs 108 est important, plus la taille du circuit augmente et diminue la surface effective de la puce pour mettre en oeuvre les fonctions à laquelle elle est destinée.

Il existe donc un problème pour améliorer la protection des circuits intégrés contre des attaques par injection de fautes de type balayage laser, sans augmenter la surface de la puce.

Les demandes de brevets européens N° EP 1 560 033, EP 1 560 031 et EP 1 876 459 concernent des circuits électroniques comprenant un mode de test sécurisé.

La publication ayant pour titre "10 tips for successful scan design: part one", Ken Jaramillo et al., décrit une technique de test de chemin interne à un circuit intégré.

### Résumé

Un objet d'un mode de réalisation de la présente invention est de pallier tout ou partie des inconvénients des mécanismes connus de détection d'attaque par balayage laser.

Un autre objet d'un mode de réalisation de la présente invention est de proposer une solution augmentant la capacité de détection de fautes d'un circuit sans pour autant augmenter notablement sa surface.

Pour atteindre tout ou partie de ces objets ainsi que d'autres, il est prévu un circuit pour détecter une injection de fautes dans un circuit intégré comportant : au moins un bloc logique pour exécuter une fonction logique du circuit intégré ; un bloc d'isolement, connecté pour recevoir un signal à traiter ainsi qu'un signal d'activation d'isolement indiquant une phase fonctionnelle et une phase de détection de fautes du premier bloc, le bloc d'isolement appliquant, pendant ladite phase fonctionnelle, ledit signal à traiter à au moins une entrée du bloc logique et, pendant ladite phase de détection, une valeur forcée à ladite entrée du bloc logique ; un bloc de détection apte à surveiller, pendant ladite phase de détection, l'état d'un signal de sortie du bloc logique, et à générer un signal d'alarme en cas de changement de l'état du signal de sortie.

Selon un mode de réalisation de la présente invention, le bloc d'isolement est apte à recevoir un signal d'horloge et à appliquer, pendant ladite phase fonctionnelle, ledit signal d'horloge à au moins une bascule et, pendant ladite phase de détection, une valeur forcée à ladite bascule.

Selon un mode de réalisation de la présente invention, le circuit comprend en outre un circuit de contournement apte à connecter, pendant ladite phase fonctionnelle, une sortie de ladite bascule à ladite entrée du bloc logique et, pendant la phase de détection, une entrée de ladite bascule à ladite entrée du bloc logique.

Selon un mode de réalisation de la présente invention, le circuit comprend en outre : au moins un élément retardateur connecté en sortie de ladite bascule ; et un comparateur de la sortie dudit élément retardateur et de la sortie de ladite bascule pour détecter un changement dans le signal de sortie de la bascule.

Selon un mode de réalisation de la présente invention, le bloc d'isolement est apte à recevoir un signal de commande pour commander une pluralité d'éléments du bloc logique, le signal d'isolement étant, pendant ladite phase fonctionnelle, apte à appliquer lesdits signaux de commande à des entrées de commande desdits éléments logiques et, pendant ladite phase de détection, à appliquer un signal à l'état bas à une entrée de commande d'au moins un desdits éléments et un signal à l'état haut à une entrée de commande d'au moins un autre desdits éléments.

Selon un mode de réalisation de la présente invention, ledit bloc d'isolement comporte des premier et deuxième multiplexeurs ayant chacun une première entrée connectée pour recevoir ledit signal de commande, une seconde entrée du premier multiplexeur étant connectée pour recevoir un signal logique à l'état haut et une deuxième entrée du second multiplexeur étant connectée pour recevoir un signal logique à l'état bas.

Selon un mode de réalisation de la présente invention, ledit bloc d'isolement comprend un multiplexeur ayant des entrées de données couplées pour recevoir le signal de données et respectivement une valeur forcée, et une entrée de commande couplée pour recevoir le signal de commande.

Selon un mode de réalisation de la présente invention, le premier bloc est un registre associé à une adresse comprenant plusieurs bits, et dans lequel ledit bloc d'isolement est apte à recevoir un signal d'adresse et à fournir, pendant la phase fonctionnelle, ledit signal d'adresse à des première et deuxième entrées d'adresses du registre et, pendant ladite phase de détection de fautes, des bits d'adresse à l'état bas à ladite première entrée d'adresse et des bits d'adresse à l'état haut à ladite deuxième entrée d'adresse.

Selon un mode de réalisation de la présente invention, ledit premier bloc est un bloc parmi : un bloc de chiffrement de données, un bloc de vérification par redondance cyclique ; une interface de communication ; une interface mémoire ; un processeur cryptographique ; et un compteur.

Selon un mode de réalisation de la présente invention, le signal d'activation d'isolement est un bit indiquant quand ledit bloc logique est utilisé de façon fonctionnelle.

Selon un mode de réalisation de la présente invention, la sortie dudit au moins un bloc logique est connectée à l'entrée d'au moins une bascule, la sortie de la bascule étant couplée à un deuxième bloc de détection apte à détecter, pendant ladite phase de détection, une modification dans un signal de sortie du bloc logique, et dans lequel la bascule est agencée pour être remise à zéro pendant ladite phase de détection.

Selon un autre aspect de la présente invention, il est prévu un circuit intégré comprenant le circuit ci-dessus.

Selon un autre aspect de la présente invention, il est prévu un dispositif électronique comprenant le circuit intégré ci-dessus.

Selon un autre aspect de la présente invention, il est prévu une carte à puce comprenant le circuit intégré ci-dessus.

Selon un autre aspect de la présente invention, il est prévu un procédé de détection d'une attaque par faute dans un circuit intégré comportant : la réception, par un bloc d'isolement, d'un signal de données et d'un signal d'activation d'isolement indiquant une phase fonctionnelle et une phase de détection de fautes d'un bloc logique ; pendant une phase fonctionnelle, l'application par le bloc d'isolement du signal de données à au moins une entrée du bloc logique ; pendant la phase de détection, l'application par le bloc d'isolement d'une valeur forcée à au moins une entrée du bloc logique ; et la surveillance pendant la phase de détection de fautes, de l'état du signal de sortie du bloc logique, et la génération d'un signal d'alarme en cas de changement de l'état du signal de sortie.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, est destiné à exposer l'état de la technique et le problème posé ;
la figure 2 est un schéma bloc d'un mode de réalisation d'un circuit de détection de fautes selon la présente invention ;
la figure 3A est un schéma bloc d'un autre mode de réalisation d'un circuit de détection de fautes selon la présente invention ;
la figure 3B est un schéma bloc d'un autre mode de réalisation d'un circuit de détection de fautes selon la présente invention ;
la figure 4 est un schéma bloc d'encore un autre mode de réalisation d'un circuit de détection de fautes selon la présente invention ;
la figure 5 représente un circuit de génération d'un signal d'activation de détecteurs selon un mode de réalisation de la présente invention ;
la figure 6 représente un exemple de bloc de détection de fautes utilisable dans les circuits des figures 2 à 4 ;
la figure 7A est un exemple plus détaillé de circuit d'isolement des circuits des figures 2 et 4 pour isoler un signal de commande ;
la figure 7B est un exemple de circuit d'isolement des figures 2 à 4 pour isoler un signal d'entrée de données ;
la figure 7C est un exemple plus détaillé de circuit d'isolement des figures 2 et 4 pour isoler un signal d'horloge ;
la figure 8 représente un circuit d'isolement couplé à une sortie d'une bascule selon un mode de réalisation de la présente invention ;
la figure 9 représente un exemple de structure d'un registre selon un mode de réalisation de la présente invention ; et
la figure 10 est un schéma bloc d'un circuit intégré selon un mode de réalisation de la présente invention.

De mêmes éléments ont été désignés par de même références aux différentes figures.

### Description détaillée

Par souci de clarté, seuls les étapes et éléments utiles à la compréhension de l'invention ont été représentés et seront décrits. En particulier, les mécanismes de blocage du circuit intégré suite à une détection d'injection de fautes par laser n'ont pas été détaillés, l'invention étant compatible avec tout mécanisme de blocage usuel. De plus, les fonctions premières exécutées par le circuit intégré (par exemple un chiffrement, un calcul de signature, une authentification de données, etc.) n'ont pas été détaillées, l'invention étant là encore compatible avec toute fonction que l'on souhaite protéger contre d'éventuelles attaques par injection de fautes.

La figure 2 est un schéma bloc d'un circuit de détection de fautes 200 comportant un bloc de logique combinatoire 202 (COMB). Lorsqu'il est activé pour un usage normal, le bloc logique 202 exécute sa fonction logique normale (ou fonction première). On fera par la suite référence à la "phase fonctionnelle" du bloc logique. Par exemple, le bloc logique 202 peut faire partie d'un circuit de chiffrement de données ou exécuter un test de redondance cyclique (CRC). En variante, le bloc de logique combinatoire 202 peut faire partie d'une interface de communication ou d'une interface mémoire, d'un processeur cryptographique, un compteur temporel ou tout autre circuit.

Pendant certaines périodes, généralement pour économiser la consommation du circuit intégré, un bloc logique 202 peut être "parqué", ce qui signifie que sa fonction normale n'est pas utilisée. Par exemple, une interface mémoire peut être parquée entre des opérations de lecture et d'écriture, ou un bloc CRC peut être parqué lorsqu'aucune donnée n'est à traiter.

On prévoit d'utiliser les périodes pendant lesquelles le bloc logique 202 est parqué ou, plus généralement, les périodes pendant lesquelles il n'est pas utilisé, pour en faire un détecteur de fautes. Ces périodes seront désignées par la suite "phase de détection" du bloc logique.

Une ou plusieurs entrées du bloc logique 202 sont couplées (liaisons 206) à une ou plusieurs sorties d'un bloc d'isolement 204 (ISOL). Le bloc d'isolement 204 reçoit des signaux de commande CTRL et/ou de données DATA sur une ou plusieurs entrées 208, et comporte une entre de commande couplée à une borne 210 d'application d'un signal d'activation d'isolement ISO_ENABLE. Le signal d'activation d'isolement indique la phase de fonctionnement du bloc logique 202, c'est-à-dire s'il est utilisé ou parqué. En fonction de l'état de ce signal, le bloc d'isolement 204 transfère les signaux de commande et/ou de données de ses entrées 208 aux entrées 206 du bloc logique 202 ou fournit des valeurs logiques forcées comme cela sera décrit plus en détails ci-après. Le bloc logique 202 comporte une sortie 212 fournissant le résultat de la fonction logique. Cette sortie 212 est couplée à d'autres fonctions (non représentées) du circuit intégré selon la destination des données traitées (par exemple, d'autres blocs logiques, une interface d'entrée-sortie, une mémoire, etc.). Un bloc de détection 214 est couplé à la sortie 212 et comporte une entrée de commandé couplée à la borne 210 d'application du signal d'activation d'isolement ISO_ENABLE. Pendant une phase de détection de fautes, le bloc de détection 214 fournit, sur une borne de sortie 216, un signal indicateur du résultat de la détection, c'est-à-dire changeant d'état lorsqu'une faute est détectée.

En phase de fonctionnement, lorsque le signal d'activation d'isolement est dans un état inactif (par exemple bas) le bloc de détection 214 est désactivé et les signaux d'entrée du bloc d'isolement 204 sont fournis au bloc 202. Le signal fourni en sortie 212 du bloc logique correspond alors au résultat de la fonction logique combinatoire 202.

Lorsque le signal d'activation d'isolement est dans un état actif (par exemple, haut), le bloc d'isolement 204 force les valeurs logiques appliquées sur les entrées 206 du bloc 202. Par exemple, ces valeurs (constantes) sont choisies de façon à avoir une propagation maximale dans le bloc logique 202, c'est-à-dire à provoquer un maximum de changement d'état dans les portes logiques de ce bloc. Cela améliore la sensibilité du bloc logique à une détection d'injection de fautes par balayage laser. En effet, si l'état de sortie d'une porte logique du bloc 202 n'impacte pas l'état fourni par le bloc sur sa ligne 212, une perturbation laser intervenant lors du balayage sur cette porte logique sera sans effet, donc non détectée.

Lorsqu'il est activé par le signal ISO_ENABLE, le bloc de détection 214 surveille le signal de sortie du bloc logique 202 pour détecter un changement par rapport à une valeur attendue. Si lors du balayage laser, le faisceau atteint l'une des portes (l'un des transistors constitutif d'une des portes) du bloc 202, la valeur de sortie 212 a de fortes chances d'être modifiée, ce qui permet au bloc 214 de détecter une attaque. L'état attendu par le bloc 214 peut être stocké à demeure dans celui-ci ou y être introduit sur une borne d'entrée additionnelle. Cet état peut également être obtenu en combinant le signal ISO_ENABLE à d'autres états.

Le signal de sortie du détecteur 214 est utilisé pour mettre en oeuvre toute contre-mesure habituelle, par exemple un blocage immédiat du circuit intégré, un blocage différé temporellement ou à partir du certains nombres d'attaques détectées, etc.

La figure 3A représente un autre mode de réalisation d'un circuit 300 de détection de fautes.

Le circuit 300 comporte des blocs 302 et 304 de logique combinatoire (COMB), chaque bloc étant par exemple du type du bloc 202 de la figure 2.

Les blocs logiques 302 et 304 sont couplés en série, c'est-à-dire que la sortie du bloc 302 est couplée à une entrée du bloc 304. Le bloc 304 peut, le cas échéant, comporter d'autres entrées (non représentées) provenant d'autres parties du circuit. La sortie de chaque bloc 302, 304 est synchronisée par des bascules, respectivement 306 et 308. Selon ce mode de réalisation, des blocs d'isolement, respectivement 310 et 312, sont prévus en entrée des blocs 302 et 304, pour isoler les entrées de commande CTRL ou de données DATA du bloc 302 ou 304. Dans d'autres modes de réalisation, les blocs 310 et 312 peuvent également isoler le signal de déclenchement (généralement un signal d'horloge CLK) de la bascule de sortie 306 ou 308 correspondante.

La sortie de chaque bloc logique 302 et 304 est par ailleurs couplée à un bloc de détection, respectivement 314, 316. Les blocs de détection 314 et 316 reçoivent également le signal d'activation d'isolement et fournissent des signaux de détection DET1 et DET2 sur des bornes de sortie respectives 318 et 320. L'état logique présent en sortie 318 ou 320 fournit le résultat de la détection d'attaques sur le bloc 302 ou 304.

Le rôle des blocs d'isolement est de stabiliser les blocs logiques, c'est-à-dire de faire en sorte que leurs entrées respectives ne varient plus de façon à être capable de prévoir et de stocker, dans le circuit de détection correspondant 314 ou 316, l'état attendu en sortie.

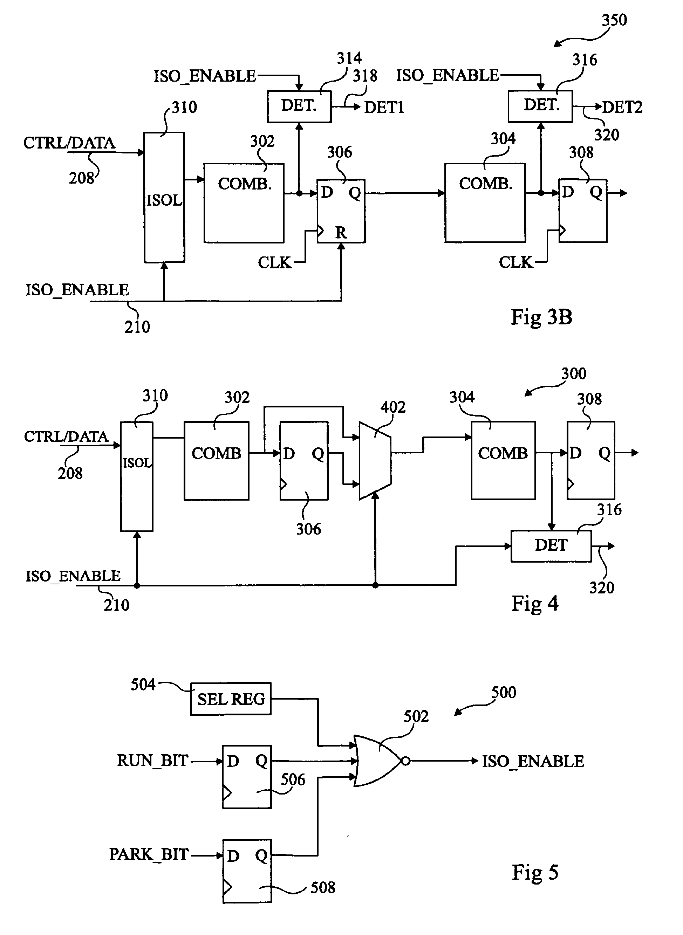

La figure 3B représente une variante 350 du circuit de détection de fautes de la figure 3A. Le circuit 350 ne comprend pas le bloc d'isolement 312, la sortie de la bascule 306 étant connectée directement au bloc logique 304. La bascule 306 comprend une entrée de remise à zéro, qui reçoit le signal d'activation d'isolement sur la ligne 210.

Lorsque le signal d'activation d'isolement est dans un état actif, par exemple haut, la bascule 306 est remise à zéro, et sa sortie est donc d'un niveau connu, par exemple au niveau bas. Le niveau de sortie du bloc logique 304 est donc également connu, et un changement du signal de sortie résultant d'une attaque contre la bascule 306 ou le bloc logique 304 peut être détecté par le bloc de détection 316.

La figure 4 représente une variante du circuit de détection de fautes 300 de la figure 3A dans laquelle la bascule 306 ne reçoit pas de signal d'horloge pendant une phase de détection. Cela peut correspondre, par exemple, à un cas où une inactivation de la fonction (fonction parquée) supprime le signal d'horloge de la bascule. Un multiplexeur 402 est alors intercalé entre la sortie de la bascule 306 et l'entrée de données/commande du bloc logique 304. Le bloc d'isolement 312 de la figure 3 est supprimé. Le multiplexeur 402 reçoit également, sur une seconde entrée, la sortie du bloc logique 302 et est commandé par le signal d'activation d'isolement ISO_ENABLE. Dans ce mode de réalisation, un seul bloc de détection 316 est partagé par toute la chaîne et détecte une attaque, sur les blocs logiques 302 et 304.

Le multiplexeur 402 autorise la bascule 306 à être contournée pendant la phase de détection de fautes, lorsque le signal d'activation d'isolement est à l'état haut. Cela signifie que, pendant que les blocs logiques 302 et 304 exécutent leur fonction normale, les bascules 306 et 308 synchronisent leurs sorties mais que, lorsque les blocs logiques 302 et 304 sont utilisés en détecteur de fautes, les signaux de sortie du bloc logique 302 sont propagés par l'intermédiaire du multiplexeur 402 au bloc logique 304. Cela permet à un unique bloc de détection 316 d'être utilisé pour détecter une perturbation dans les blocs logiques 302 et 304. Il serait également possible de détecter une perturbation sur les bascules 306 et 308 en utilisant un bloc de détection adapté à cette détection, tel que décrit dans la demande de brevet US 12/121,957 (07-RO-080, B8286), dont le contenu est incorporé dans la présente demande jusqu'aux limites permises par la loi.

La figure 5 illustre un exemple de circuit 500 de génération d'un signal d'activation d'isolement ISO_ENABLE. Le circuit 500 comprend une porte 502 de type NON_OU (NOR) à trois entrées respectivement couplées en sortie d'un registre de sélection 504 (SEL REG), en sortie d'une bascule 506 et en sortie d'une autre bascule 508. Le registre de sélection 504 contient, par exemple, une valeur drapeau sur un bit indiquant lorsque un ou plusieurs des blocs de logique combinatoire qui reçoivent le signal d'activation d'isolement doivent être utilisés pour exécuter leur fonction normale. Par exemple, en supposant que les blocs de logique combinatoire concernent une interface mémoire, le registre de sélection peut stocker un drapeau de lecture ou d'écriture, indiquant lorsqu'une opération de lecture ou d'écriture est en cours dans la mémoire.

Les bascules 506 et 508 traitent des signaux de commande. Par exemple, la bascule 506 reçoit un signal "RUN_BIT" indiquant que le bloc logique combinatoire associé est actif tandis que la bascule 508 reçoit un signal de mise en veille "PARK_BIT" indiquant que le bloc logique combinatoire associé est parqué ou non utilisé pour sa fonction normale. Chacun de ces signaux est, par exemple, à l'état bas lorsque les blocs logiques correspondant ne sont pas en activité. Par conséquent, la porte 502 fournit un signal d'activation d'isolement actif lorsque les trois signaux d'entrées de la porte sont à l'état bas. Le signal RUN_BIT correspond, par exemple, au signal d'activation de la fonction de détection de fautes. Dans ce cas, ce signal est actif à l'état bas.

Selon la fonction du bloc logique et l'existence d'une fonction de mise en veille, le circuit de génération du signal d'activation d'isolement prend en compte tout ou partie des signaux indiqués, voire encore d'autres signaux.

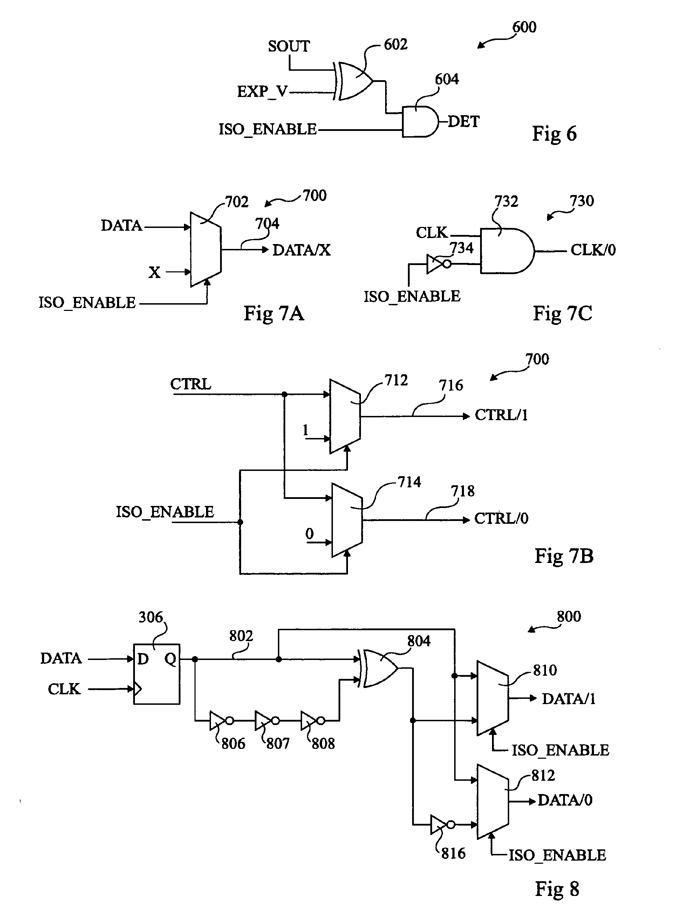

La figure 6 représente un exemple de bloc de détection 600 utilisable, par exemple, dans les blocs 214, 314 ou 316 pour détecter une faute à partir du signal (noté ici SOUT) fourni par le bloc logique combinatoire correspondant. En fonction des signaux forcés en entrée du bloc logique par le circuit d'isolement, on connaît, lors de la conception du circuit, quelle est la valeur attendue (EXP_V) en sortie SOUT.

Le bloc de détection 600 comprend une porte 602 de type OU Exclusif (XOR) à deux entrées dont les entrées reçoivent la sortie SOUT du bloc logique et la valeur attendue EXP_V. Si ces valeurs sont identiques, la sortie de la porte 602 est à l'état bas tandis que si elles ne correspondent pas, sa sortie sera à l'état haut. La sortie de la porte 602 est couplée à une entrée de porte 604, par exemple de type ET (AND) à deux entrées, dont l'autre entrée reçoit le signal d'activation d'isolement ISO_ENABLE. Dans cet exemple, un signal ISO_ENABLE à l'état haut signifie une activation de la détection de fautes et la porte 604 fournira alors une sortie à l'état haut quand une faute est détectée. Le signal de détection DET en sortie du bloc 600 est, par exemple, utilisé pour désactiver le circuit intégré ou incrémenter un compteur.

Les figures 7A, 7B et 7C illustrent des parties de blocs d'isolement (par exemple des blocs 204, 310 et 312 des figures 2, 3 et 4) pour traiter des données, des commandes et des signaux d'horloges respectifs. Par exemple, dans le mode de réalisation de la figure 4, le bloc d'isolement 310 peut isoler non seulement des signaux de données et/ou de commande, mais également des signaux d'horloge.

La figure 7A représente un circuit 700 recevant un signal de données DATA sur une entrée d'un multiplexeur 702 à deux entrées. L'autre entrée du multiplexeur 702 reçoit une valeur d'entrée X constante ou forcée qui est fixée à l'un des niveaux logiques haut (1) et bas (0). Une entrée de commande du multiplexeur 702 reçoit le signal d'activation d'isolement ISO_ENABLE.

La sortie 704 du multiplexeur 702 fournit, soit le signal de données DATA lorsque le bloc logique correspondant exécute sa fonction normale, soit la valeur fixée X lorsque le bloc logique correspondant est utilisé en détecteur de fautes.

La figure 7B représente un circuit 710 recevant un signal de commande CTRL qui est fourni sur des entrées respectives de deux multiplexeurs 712 et 714 à deux entrées. Les secondes entrées respectives de ces multiplexeurs reçoivent respectivement un état logique haut (1) et bas (0), et leurs entrées de commande respectives reçoivent le signal d'activation d'isolement ISO_ENABLE.

En fonctionnement, une sortie 716 du multiplexeur 712 fournit le signal de commande CTRL lorsque le bloc logique correspondant doit fonctionner normalement et un état 1 lorsque le bloc logique correspondant est utilisé en détecteur de fautes. Par ailleurs, la sortie 718 du multiplexeur 714 fournit le signal de commande CTRL quand le bloc logique correspondant exécute sa fonction normale et un état "0" lorsque le bloc logique est utilisé en détecteur de fautes.

Les sorties 716 et 718 sont reliées à des noeuds de commande du bloc logique correspondant (non représenté). Par exemple, les signaux de commande peuvent conduire à ce que des portions des blocs logiques soient activées ou désactivées. Le choix entre la sortie 716 ou 718 pour fournir ces signaux de commande dépend de l'état requis pour activer les éléments du bloc logique. Le plus souvent, un même bloc logique requiert des signaux de commande bas et haut et les deux sorties sont utilisées. En variante, le circuit 710 ne comporte qu'un étage bas ou haut.

La figure 7C représente un circuit 730 recevant un signal d'horloge CLK qui est fourni sur une entrée d'une porte 732 de type ET (AND) à deux entrées dont l'autre entrée reçoit la sortie d'un inverseur 734 dont l'entrée reçoit le signal d'activation d'isolement ISO_ENABLE. La porte 732 autorise le passage du signal d'horloge CLK lorsque le signal d'activation d'isolement est à l'état bas et fournit un état logique 0 lorsque le signal d'activation d'isolement est à l'état haut. En variante, le circuit 730 est conformé pour fournir un état logique 1 lorsque le signal d'activation d'isolement est à l'état haut, par exemple en remplaçant la porte 732 et l'inverseur 734 par une porte de type NON-OU (NOR).

Dans les modes de réalisation des figures 3A et 4, une attaque atteignant les bascules 306 et 308 ne conduira pas à la détection d'une faute dans la mesure où ces bascules sont contournées alors que les blocs logiques correspondants sont utilisés en détection de fautes.

La figure 8 représente un exemple de bascule 306 recevant un signal de commande CTRL ou de données DATA provenant d'un bloc logique précédent en étant synchronisé par un signal d'horloge CLK. La sortie 802 de la bascule 306 est reliée à une entrée d'une porte 804 de type OU-Exclusif (XOR) à deux entrées et également en entrée d'un premier de trois inverseurs 806 à 808 connectés en série, la sortie du dernier inverseur 808 étant relié à la seconde entrée de la porte 804. La sortie 802 est également connectée à des premières entrées respectives de deux multiplexeurs 810 et 812 à deux entrées. La deuxième entrée du multiplexeur 810 est reliée en sortie de la porte 804 et la deuxième entrée du multiplexeur 812 est reliée en sortie d'un inverseur 816 dont l'entrée est reliée en sortie de la porte 804. Les multiplexeurs 810 et 812 sont commandés par le signal d'activation d'isolement ISO_ENABLE.

Pendant la phase fonctionnelle de blocs logiques connectés en amont et en aval du circuit 800, le signal d'activation d'isolement étant à l'état bas, les multiplexeurs 810 et 812 fournissent le signal de données tel que fourni par la bascule 306. Lorsque les blocs logiques correspondants sont utilisés en détecteur de fautes et que le signal d'activation d'isolement est à l'état haut, le signal d'horloge CLK est désactivé (par un circuit non représenté) et la sortie de la bascule 306 est fixée à une valeur logique 0 ou 1. Tant que cette sortie ne varie pas, la sortie de la porte 804 reste à l'état haut grâce aux inverseurs 806 à 808 qui fournissent une valeur inverse et les sorties des multiplexeurs 810 et 812 fournissent respectivement un état 1 et un état 0.

Toutefois, en présence d'une attaque atteignant la bascule 306, sa sortie va être modifiée. Cela ne va pas conduire immédiatement à une modification de l'état de la sortie de l'inverseur 808 en raison du retard de propagation dans ses inverseurs. Par conséquent, la sortie de la porte 804 va temporairement changer d'état ce qui engendre que la sortie des multiplexeurs 810 et 812 changent également d'état temporairement. Le bloc de détection connecté à l'une ou l'autre des sorties des multiplexeurs 810 et 812 va par conséquent détecter la faute. En variante, selon l'usage fait du signal en sortie du circuit 800, un seul multiplexeur suffit.

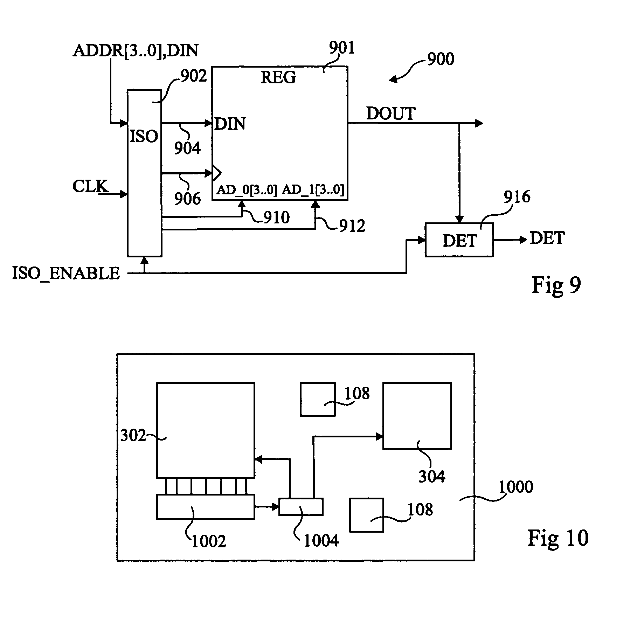

La figure 9 représente un circuit de détection de fautes 900 comprenant un registre 901 et un bloc d'isolement 902 commandé par le signal d'activation d'isolement ISO_ENABLE.

Le bloc d'isolement 902 intercepte le signal d'adresse ADDR[3...0], le signal de données DIN et le signal d'horloge CLK destinés au registre. Le bloc d'isolement reçoit le signal d'activation ISO_ENABLE, égal par exemple à un signal de sélection correspondant au registre 901. Le bloc d'isolement traite le signal de données DIN et le signal d'horloge CLK comme décrit ci-dessus en relation avec les figures 7A à 7C et fournit les signaux correspondants sur des liaisons 904 et 906 au registre 901.

Par ailleurs, le registre 901 comporte deux entrées 910 et 912 d'adresse, respectivement AD_0[3..0] et AD_1[3..0]. Lorsque le registre exécute sa fonction normale et que le signal d'activation d'isolement est à l'état bas, l'adresse ADDR[3...0] est fournie, par le bloc 902, sur les deux entrées 910 et 912. Lorsque le registre est utilisé en détecteur de fautes, une valeur sur quatre bits "0000" est fournie, par le bloc 902, sur la liaison 910, et une valeur sur quatre bits "1111" est fournie, par le bloc 902, sur la liaison 912.

Le registre connaît sa propre adresse. En fonctionnement normal et en mode de détection, le registre compare les bits de son adresse qui sont à un état 0 avec les bits correspondants reçus sur l'entrée 910, et les bits de son adresse qui sont à un état 1 avec les bits correspondants reçus sur la liaison 912. S'ils sont identiques, l'adresse est considérée valide. Ainsi, pendant un fonctionnement normal du registre, l'adresse ADDR[3...0] sera considérée comme valide uniquement si elle correspond à celle du registre. Par contre, lorsque le registre est utilisé en détecteur de fautes, l'adresse sera tout le temps considérée valide.

Par exemple, en supposant que l'adresse du registre est "1010", pour vérifier l'adresse, le registre vérifie que AD_1[3]=1, AD_0[2]=0, AD_1[1]=1 et AD_0[0]=0.

La figure 10 représente un circuit intégré 1000, similaire au circuit intégré 100 de la figure 1, en ce qu'il comprend des blocs de circuit 302 et 304 qui incluent, par exemple, des portions sensibles. De plus, le circuit 1000 comporte un certain nombre de blocs de détection d'erreur 108 pour détecter des fautes provoquées par des attaques de type laser lors d'un balayage de la surface du circuit. De plus, le circuit 100 comprend un circuit de détection d'erreur 1002, couplé au bloc 302, pour isoler le bloc 302 au moins quand il n'est pas utilisé de façon normale.

Suite à la détection d'une ou plusieurs attaques par faute, un circuit 1004 rend le bloc 302 et/ou le bloc 304 non fonctionnels.

Le circuit intégré 1000 fait partie par exemple d'un dispositif électronique, tel qu'une carte à puce, un décodeur vidéo, un téléphone portable ou tout autre dispositif.

Dans l'exemple de la figure 10, seul le circuit 302 isolé est utilisé en détecteur de fautes. En variante, plusieurs circuits et par exemple le circuit 304 peuvent également être utilisés en détecteur de fautes.

Les modes de réalisation décrits permettent d'accroître la surface effective du circuit intégré susceptible d'être utilisée en détecteur de perturbation au prix d'une très faible réduction de la surface du circuit disponible pour les fonctions principales.

Bien qu'un certain nombre de modes de réalisation aient été décrits, il apparaîtra à l'homme de l'art que diverses variantes peuvent être envisagées.

Par exemple, bien que l'on ait fait référence à un signal d'horloge gelé pendant les détections de fautes, le signal d'horloge peut dans certaines variantes continuer à être utilisé, dans le cas où les sorties des bascules sont isolées.

De plus, bien que des exemples de valeurs logiques particulières (0 ou 1) aient été décrits pour les signaux d'activation d'isolement et autre signaux de données et de commande pendant les détections d'attaque par fautes, les signaux inverses peuvent être utilisés. De plus, bien que les modes de réalisation décrivent l'utilisation d'un signal de sortie de chaque bloc logique pour une détection de fautes, on pourra utiliser plus d'un signal de sortie, voire tous les signaux de sortie, d'un bloc logique pour surveiller une éventuelle faute.

En outre, d'autres circuits que ceux décrits à titre d'exemple pourront être envisagés pourvu qu'ils réalisent des fonctions similaires.

Enfin, les différentes caractéristiques et variantes décrites dans les divers modes de réalisation pourront être combinées.

## Revendications

1. Circuit pour détecter une injection de fautes dans un circuit intégré comportant :
au moins un bloc logique (202, 302, 304, 306, 308) pour exécuter une fonction logique du circuit intégré ;
un bloc d'isolement (204, 310, 312, 1002), connecté pour recevoir un signal à traiter (208) ainsi qu'un signal d'activation d'isolement indiquant une phase fonctionnelle et une phase de détection de fautes du bloc logique, le bloc d'isolement appliquant, pendant ladite phase fonctionnelle, ledit signal à traiter à au moins une entrée du bloc logique et, pendant ladite phase de détection, une valeur forcée à ladite entrée du bloc logique,
**caractérisé en ce que** le circuit comporte également un bloc de détection apte à surveiller, pendant ladite phase de détection, l'état d'un signal de sortie du bloc logique, et à générer un signal d'alarme en cas de changement de l'état du signal de sortie pendant ladite phase de détection.

2. Circuit selon la revendication 1, dans lequel le bloc d'isolement est apte à recevoir un signal d'horloge (CLK) et à appliquer, pendant ladite phase fonctionnelle, ledit signal d'horloge à au moins une bascule (306, 308) et, pendant ladite phase de détection, une valeur forcée à ladite bascule.

3. Circuit selon la revendication 2, comprenant en outre un circuit de contournement (402) apte à connecter, pendant ladite phase fonctionnelle, une sortie de ladite bascule à ladite entrée du bloc logique et, pendant la phase de détection, une entrée de ladite bascule à ladite entrée du bloc logique.

4. Circuit selon la revendication 2, comprenant en outre :
au moins un élément retardateur (806-808) connecté en sortie de ladite bascule ; et
un comparateur de la sortie dudit élément retardateur et de la sortie de ladite bascule pour détecter un changement dans le signal de sortie de la bascule.

5. Circuit selon l'une quelconque des revendications 1 à 4, dans lequel le bloc d'isolement est apte à recevoir un signal de commande (CTRL) pour commander une pluralité d'éléments du bloc logique, le signal d'isolement étant, pendant ladite phase fonctionnelle, apte à appliquer lesdits signaux de commande à des entrées de commande desdits éléments logiques et, pendant ladite phase de détection, à appliquer un signal à l'état bas à une entrée de commande d'au moins un desdits éléments et un signal à l'état haut à une entrée de commande d'au moins un autre desdits éléments.

6. Circuit selon la revendication 5, dans lequel ledit bloc d'isolement comporte des premier et deuxième multiplexeurs (712, 714) ayant chacun une première entrée connectée pour recevoir ledit signal de commande, une seconde entrée du premier multiplexeur étant connectée pour recevoir un signal logique à l'état haut et une deuxième entrée du second multiplexeur étant connectée pour recevoir un signal logique à l'état bas.

7. Circuit selon l'une quelconque des revendications 1 à 6, dans lequel ledit bloc d'isolement comprend un multiplexeur (702) ayant des entrées de données couplées pour recevoir le signal de données et respectivement une valeur forcée, et une entrée de commande couplée pour recevoir le signal de commande.

8. Circuit selon l'une quelconque des revendications 1 à 7, dans lequel le bloc logique est un registre (901) associé à une adresse comprenant plusieurs bits, et dans lequel ledit bloc d'isolement (902) est apte à recevoir un signal d'adresse et à fournir, pendant la phase fonctionnelle, ledit signal d'adresse à des première et deuxième entrées d'adresses du registre et, pendant ladite phase de détection de fautes, des bits d'adresse à l'état bas à ladite première entrée d'adresse et des bits d'adresse à l'état haut à ladite deuxième entrée d'adresse.

9. Circuit selon l'une quelconque des revendications 1 à 8, dans lequel ledit bloc logique est un bloc parmi :
un bloc de chiffrement de données, un bloc de vérification par redondance cyclique (CRC) ;
une interface de communication ;
une interface mémoire ;
un processeur cryptographique ; et
un compteur.

10. Circuit selon l'une quelconque des revendications 1 à 9, dans lequel le signal d'activation d'isolement est un bit indiquant quand ledit bloc logique est utilisé de façon fonctionnelle.

11. Circuit selon l'une quelconque des revendications 1 à 10, dans lequel la sortie dudit au moins un bloc logique est connectée à l'entrée d'au moins une bascule, la sortie de la bascule étant couplée à un deuxième bloc de détection apte à détecter, pendant ladite phase de détection, une modification dans un signal de sortie du bloc logique, et dans lequel la bascule est agencée pour être remise à zéro pendant ladite phase de détection.

12. Circuit intégré comprenant un circuit selon l'une quelconque des revendications 1 à 11.

13. Dispositif électronique comprenant un circuit intégré selon la revendication 12.

14. Carte à puce comprenant un circuit intégré selon la revendication 12.

15. Procédé de détection d'une attaque par faute dans un circuit intégré comportant :
la réception, par un bloc d'isolement (204, 310, 312, 1002), d'un signal de données (208) et d'un signal d'activation d'isolement indiquant une phase fonctionnelle et une phase de détection de fautes d'un bloc logique ;
pendant une phase fonctionnelle, l'application par le bloc d'isolement du signal de données à au moins une entrée du bloc logique ;
pendant la phase de détection, l'application par le bloc d'isolement d'une valeur forcée à au moins une entrée du bloc logique,
**caracterisé en ce que** le procédé comporte également une étape de surveillance pendant la phase de détection de fautes, de l'état du signal de sortie du bloc logique, et la génération d'un signal d'alarme en cas de changement de l'état du signal de sortie pendant ladite phase de détection de fautes.

## Patentansprüche

1. Eine Schaltung zum Detektieren einer Fehlereingabe in eine integrierte Schaltung zum Detektieren einer Fehlerinjektion bzw. einer Fehlereingabe in eine integrierte Schaltung, wobei Folgendes vorgesehen ist:
mindestens ein Logikblock (202, 302, 304, 306, 308) zur Ausführung einer logischen Funktion der erwähnten integrierten Schaltung;
ein Isolations- oder Trennblock (204, 310, 312, 1002), gekoppelt zum Empfang eines zu verarbeitenden Signals (208) und eines Isolations- bzw. Trenn-Aktivierungssignals, und zwar eine Funktionsphase und eine Detektionsphase des Logikblocks anzeigend, wobei der Isolationsblock während der Funktionsphase das erwähnte zu verarbeitende Signal an mindestens einen Eingang des Logikblocks anlegt und während der Detektionsphase einen konstanten Wert an den erwähnten Eingang des Logikblocks anlegt,
**dadurch gekennzeichnet, dass** die Schaltung ferner einen Detektionsblock aufweist, der ausgebildet ist zur Überwachung während der erwähnten Detektionsphase, des Zustandes des erwähnten Ausgangssignals des Logikblocks, und zur Erzeugung eines Warnsignals im Falle irgendeiner Änderung im Zustand des Ausgangssignals während der Detektionsphase.

2. Schaltung nach Anspruch 1, wobei der Isolationsblock geeignet ist ein Taktsignal (CLK) zu empfangen und das Taktsignal während der erwähnten Funktionsphase an mindestens ein Flip-Flop (306, 308) anzulegen, und ferner während der Detektionsphase einen konstanten Wert an das Flip-Flop anzulegen.

3. Schaltung nach Anspruch 2, wobei ferner eine Bypass-Schaltung (402) vorgesehen ist, und zwar geeignet zum Koppeln während der erwähnten Funktionsphase eines Ausgangs des Flip-Flops mit dem erwähnten Eingang des Logikblocks und während der erwähnten Detektionsphase einen Eingang des Flip-Flops mit dem erwähnten Eingang des Logikblocks.

4. Schaltung nach Anspruch 2, wobei ferner Folgendes vorgesehen ist:
mindestens ein Verzögerungselement (806-808), gekoppelt mit einem Ausgang des Flip-Flops; und
ein Komparator, geeignet zum Vergleichen der Ausgangsgröße des Verzögerungselements mit der Ausgangsgröße des erwähnten Flip-Flops, um eine Änderung im Ausgangssignal des Flip-Flops zu detektieren.

5. Schaltung nach einem der Ansprüche 1 bis 4, wobei der Isolationsblock geeignet ist zum Empfang eines Steuersignals (CTRL) zur Steuerung einer Vielzahl von Elementen des Logikblocks, wobei das Isolationssignal geeignet ist, während der Funktionsphase, die erwähnten Steuersignale an die Steuereingänge der Vielzahl von Elementen anzulegen und um während der erwähnten Detektionsphase ein logisch niedriges Signal an einen Steuereingang von mindestens einem der erwähnten Elemente und ein logisch hohes Signal an einen Steuereingang von mindestens einem weiteren der erwähnten Elemente anzulegen.

6. Schaltung nach Anspruch 5, wobei der Isolationsblock erste und zweite Multiplexer (712, 714) aufweist, deren jeder einen ersten Eingang besitzt, und zwar gekoppelt zum Empfang des erwähnten Steuersignals, wobei ein zweiter Eingang des ersten Multiplexers gekoppelt ist zum Empfang eines logisch hohen Signals und ein zweiter Eingang des zweiten Multiplexers gekoppelt ist zum Empfang eines logisch niedrigen Signals.

7. Schaltung nach einem der Ansprüche 1 bis 6, wobei der Isolationsblock einen Multiplexer (702) aufweist, der Dateneingänge besitzt, und zwar gekoppelt zum Empfang des Datensignals bzw. des konstanten Wertes, und ferner mit einem Steuereingang, gekoppelt zum Empfang des Steuersignals.

8. Schaltung nach einem der Ansprüche 1 bis 7, wobei der Logikblock ein Register (901) ist, assoziiert mit einer eine Vielzahl von Bits aufweisenden Adresse, und wobei der Isolationsblock (902) geeignet ist ein Adressensignal zu empfangen, und während der erwähnten Funktionsphase das erwähnte Adressensignal an die ersten und zweiten Adresseneingänge des Registers zu liefern, und während der Detektionsphase logisch niedrige Adressenbits an den ersten Adresseneingang und logisch hohe Adressenbits an den zweiten Adresseneingang zu liefern.

9. Schaltung nach einem der Ansprüche 1 bis 8, wobei der Logikblock eines von Folgendem ist:
ein Datenverschlüsselungsblock;
ein zyklischer Redundanzprüf- (CRC) Block;
ein Kommunikationsinterface;
ein Speicherinterface;
ein kryptographischer Prozessor; und
eine Zeitsteuervorrichtung (timer).

10. Schaltung nach einem der Ansprüche 1 bis 9, wobei das Isolations-Freigabesignal ein Bit ist, welches anzeigt wann der erwähnte mindestens eine Logikblock für seinen Funktions-Zweck verwendet wird.

11. Schaltung nach einem der Ansprüche 1 bis 10, wobei die Ausgangsgröße des erwähnten mindestens einen Logikblocks mit dem Eingang von mindestens einem Flip-Flop gekoppelt ist,
der Ausgang des Flip-Flops gekoppelt ist mit einem zweiten Detektionsblock, geeignet zum Detektieren während der Detektionsphase einer Änderung in dem Ausgangssignal des Logikblocks, und wobei das Flip-Flop geeignet ist während der Detektionsphase zurückgesetzt zu werden.

12. Eine integrierte Schaltung, die die Schaltung eines der Ansprüche 1 bis 11 aufweist.

13. Eine elektronische Vorrichtung, die die integrierte Schaltung des Anspruchs 12 aufweist.

14. Eine IC (integrierte Schaltungs)-Karte, die die integrierte Schaltung nach Anspruch 12 aufweist.

15. Ein Verfahren zum Detektieren einer Fehlerattacke in einer integrierten Schaltung, wobei Folgendes vorgesehen ist:
Empfang durch einen Isolationsblock (204, 310, 312, 1002) eines Datensignals (208) und eines Isolations-Freigabesignals, welches eine Funktionsphase und eine Fehlerdetektionsphase des Logikblocks anzeigt;
Anlegen während der Funktionsphase durch den Isolationsblock das erwähnte Datensignal an den mindestens einen Eingang des Logikblocks;
Anlegen während der Detektionsphase durch den Isolationsblock einen konstanten Wert an den mindestens einen Eingang des Logikblocks;
**dadurch gekennzeichnet, dass** das Verfahren ferner den folgenden Schritt aufweist:
Überwachung während der Fehlerdetektionsphase den Zustand des Ausgangssignals des Logikblocks und Erzeugen eines Warnsignals, wenn irgendeine Änderung in dem Zustand des Ausgangssignals während der erwähnten Detektionsphase auftritt.

## Claims

1. A circuit for detecting a fault injection in an integrated circuit comprising:
at least one logic block (202, 302, 304, 306, 308) for performing a logic function of said integrated circuit;
an isolation block (204, 310, 312, 1002) coupled to receive a signal to be processed (208) and an isolation enable signal indicating a functional phase and a detection phase of the logic block, the isolation block applying, during said functional phase, said signal to be processed to at least one input of the logic block, and during said detection phase, a constant value to said input of the logic block,
**characterized in that** the circuit further comprises a detection block adapted to monitor, during said detection phase, the state of said output signal of the logic block, and to generate an alert signal in case of any change in the state of the output signal during said detection phase.

2. The circuit of claim 1, wherein the isolation block is adapted to receive a clock signal (CLK), and to apply, during said functional phase, said clock signal to at least one flip-flop (306, 308), and during said detection phase, a constant value to said flip-flop.

3. The circuit of claim 2, further comprising a bypass circuit (402) adapted to couple, during said functional phase, an output of said flip-flop to said input of the logic block, and during said detection phase, an input of said flip-flop to said input of the logic block.

4. The circuit of claim 2, further comprising:
at least one delay element (806-808) coupled to an output of said flip-flop; and
a comparator adapted to compare the output of said delay element and the output of said flip-flop to detect a change in the output signal of the flip-flop.

5. The circuit of any of claims 1 to 4, wherein the isolation block is adapted to receive a control signal (CTRL) for controlling a plurality of elements of the logic block, the isolation signal being adapted to apply, during the functional phase, said control signals to control inputs of said plurality of elements, and to apply, during said detection phase, a logic low signal to a control input of at least one of said elements and a logic high signal to a control input of at least another one of said elements.

6. The circuit of claim 5, wherein said isolation block comprises first and second multiplexers (712, 714) each having a first input coupled to receive said control signal, a second input of the first multiplexer being coupled to receive a logic high signal, and a second input of the second multiplexer being coupled to receive a logic low signal.

7. The circuit of any of claims 1 to 6, wherein said isolation block comprises a multiplexer (702) having data inputs coupled to receive the data signal and the constant value respectively, and a control input coupled to receive the control signal.

8. The circuit of any of claims 1 to 7, wherein the logic block is a register (901) associated with an address comprising a plurality of bits, and wherein said isolation block (902) is adapted to receive an address signal, and to supply, during said functional phase, said address signal to first and second address inputs of said register, and during said detection phase, logic low address bits to said first address input and logic high address bits to said second address input.

9. The circuit of any of claims 1 to 8, wherein said logic block is one of:
a data encryption block;
a cyclic redundancy check (CRC) block;
a communications interface;
a memory interface;
a cryptographic processor; and
a timer.

10. The circuit of any of claims 1 to 9, wherein the isolation enable signal is a bit indicating when said at least one logic block is being used for is functional purpose.

11. The circuit of any of claims 1 to 10, wherein the output of said at least one logic block is coupled to the input of at least one flip-flop, the output of the flip-flop being coupled to a second detection block adapted to detect, during said detection phase, a change in the output signal of the logic block, and wherein the flip-flop is adapted to be reset during said detection phase.

12. An integrated circuit comprising the circuit of any of claims 1 to 11.

13. An electronic device comprising the integrated circuit of claim 12.

14. An IC (integrated circuit) card comprising the integrated circuit of claim 12.

15. A method of detecting a fault attack in an integrated circuit, comprising:
receiving, by an isolation block (204, 310, 312, 1002), a data signal (208) and an isolation enable signal indicating a functional phase and a fault detection phase of a logic block;
during the functional phase, applying by the isolation block said data signal to at least one input of the logic block;
during the detection phase, applying by the isolation block a constant value to the at least one input of the logic block; **characterized in that** the method further comprises the step of
monitoring, during the fault detection phase, the state of the output signal of the logic block, and generating an alert signal if there is any change in the state of the output signal during said detection phase.
